# EUROPEAN PATENT SPECIFICATION

(11) **EP 1 697 263 B1**
(45) Date of publication and mention of the grant of the patent: **23.04.2014**
(21) Application number: 03789652.9
(22) Date of filing: 23.12.2003
(51) Int. Cl.: C02F 1/28, C02F 1/62, B01J 20/06

(54) **METHOD FOR THE REMOVAL OF METALS FROM A METAL-CONTAINING AQUEOUS MEDIUM**
VERFAHREN ZUR ENTFERNUNG VON METALLEN AUS EINEM METALL ENTHALTENDEN WÄSSRIGEN MEDIUM
PROCÉDÉ D' EXTRACTION DE MÉTAUX À PARTIR D' UN MILIEU AQUEUX

(43) Date of publication of application: 06.09.2006
(73) Proprietor: IHE Delft, 2611 AX Delft (NL)
(72) Inventor: PETRUSEVSKI, Branislav, NL-2622 LJ Delft (NL); SHARMA, Saroj, Kumar, NL-2624 ZC Delft (NL); SCHIPPERS, Jan, Cornelis, NL-3284 KJ Zuid-Beijerland (NL)
(74) Representative: Algemeen Octrooi- en Merkenbureau B.V.
(86) International application number: PCT/NL2003/000927
(87) International publication number: WO 2005/061391

(56) References cited:
- WO-A-94/06717
- US-A- 5 075 010
- US-B1- 6 599 429
- JENS MOLLER: "removal of dissolved heavy metals from pre-settled stormwater runoff by iron-oxide coated sand"[Online] 2 May 2002 (2002-05-02), pages 1-10, XP008034785 Retrieved from the Internet: URL:http://www.enpc.fr/cereve/HomePages/th evenot/www-jes-2002/Moeller-Paper-2002.pdf > [retrieved on 2004-08-26]
- EDWARDS M ET AL: "ADSORPTIVE FILTRATION USING COATED SAND: A NEW APPROACH FOR TREATMENT OF METAL-BEARING WASTES" JOURNAL OF THE WATER POLLUTION CONTROL FEDERATION, WATER POLLUTION CONTROL FEDERATION. WASHINGTON, US, vol. 61, no. 9 / 10, 1 September 1989 (1989-09-01), pages 1523-1533, XP000173147

## Description

The present invention relates to a method for the removal of metals from a metal-containing aqueous medium, wherein said aqueous medium is contacted with a carrier material, which carrier material functions as an adsorption medium for the metals.

Such a method is known per se from International application WO 94/06717, in which a metal-containing aqueous medium is passed through a particulate carrier material in the presence of an Fe (II) solution and an oxidant at such velocity and in such direction that the carrier material is fluidized in the aqueous medium. When such Fe (II) ions are contacted with the surface of the carrier material in the presence of an oxidant, the Fe (II) ions are adsorbed onto the surface of the carrier material, and the adsorbed Fe (II) ions are subsequently oxidized to form Fe (III) ions which are then rapidly converted into iron oxyhydroxide by reacting with water. The layer of iron oxyhydroxide thus formed in-situ acts as an adsorbent for or may react with the metals contained in the aqueous medium, which metals are thus bonded to the carrier material particles. According to the experimental data that are shown in Table 5 of the aforesaid International application, for example, the removal efficiency of e.g. arsenic is initially low, viz. 65.3%, after which said efficiency slowly increases to a value of approximately 99.8%. On the basis of these measuring data it is apparent that the effluent from the reactor contains a significant amount of metals at the start of the process, which renders it unsuitable for human consumption, therefore. If the effluent is to be drained into the surface water, the high iron content might also present problems. Although the removal efficiency reaches a value of more than 99% after some time, the effluent obtained at the start of the process is still strongly contaminated with heavy metals. One drawback of such a method is the fact that it is often difficult in practice to determine the moment at which the high degree of efficiency is achieved, especially in those cases in which no use is made of costly analysis equipment. Since the carrier material must be in a fluidisation condition, special requirements need to be made with regard to the dimensions of the carrier material. This means that only a precise screen fraction is suitable for use with such a method.

Document JENS MOLLER: "removal of dissolved heavy metals from pre-settled stormwater runoff by iron-oxide coated sand", proceedings of the international conference on urban drainage, 08 September 2002, pages 1-11, discloses a method for the removal of dissolved heavy metals in storm water runoff using iron oxide coated sand which is regenerated by soaking in weak acid solution.

Document US 5,075,010 discloses a method for removing iron and manganese from underground water using a bed of particles made of anthracite granules, quartz sand or plastic granules and continuously forming and regenerating a coating of iron oxyhydroxide by using Fe²⁺ already present in the water in combination with aeration and controlling the concentration of Fe³⁺ and pH of the aerated water.

It is an object of the present invention to provide a method for the removal of metals from a metal-containing aqueous medium, wherein a high removal efficiency of heavy metals is achieved from the outset already.

Another object of the present invention is to provide a method for the removal of metals from a metal-containing aqueous medium, wherein critical requirements with regard to the special particle size of the carrier material are things of the past.

Yet another object of the present invention is to provide a method for the removal of metals from a metal-containing aqueous medium, wherein the carrier material, which is saturated with metals, can be regenerated in a simple and effective manner.

Yet another object of the present invention is to provide a method for the removal of metals from a metal-containing aqueous medium, wherein use is made of a carrier material that is available on a large scale.

The invention as referred to in the introduction is characterized in that the method comprises the following steps:
a) providing an iron oxydehydroxide-coated filter medium as the carrier material,
b) contacting the carrier material obtained in step a) with the aqueous medium so as to obtain an effluent,
c) terminating step b) when the metal content of the effluent exceeds a specific value,
d) regenerating the carrier material from step c) by contacting said carrier material with an Fe (II) solution, and possibly
e) repeating steps b)-d).

One or more of the objects of the present invention are accomplished by carrying out the present method. It should be noted in particular that the present invention is effective immediately after step b) has been started. The effluent obtained in step b) is to be considered as an aqueous flow, the metals content of which is lower than that of the aqueous medium from which the metals are to be removed. Using a special carrier material, in particular an iron oxydehydroxide-coated filter medium, an effluent flow not containing any heavy metals is obtained immediately after the aqueous medium has been contacted with the carrier material. Using the present method, the removal efficiency is higher than 99% at the outset already. Since a high degree of efficiency is obtained from the moment the aqueous medium and the carrier material are contacted with each other, the effluent thus obtained is suitable for use, for example as drinking water fit for human consumption.

Typical process conditions are:
diameter of the carrier material = 0.8 - 5.0 mm,
filtration rate = 0.5 - 20.0 m/h, preferably 5.0 - 10.0 m/h,
duration of steps a-b) = a few weeks on average,
total depth of filter bed = 0.5 - 4.0 m, preferably 2.0 - 3.0 m.

It should be understood that the filter medium is arranged as a fixed bed, but in specific embodiments it is preferable to arrange a number of individual filter units, in particular 2-3 filter units, in series, wherein each filter unit can be regenerated separately without having to put the entire installation out of operation. In addition it is possible to operate each filter unit in series in random order.

Since the carrier material will be saturated after some time with the metals to be removed from the aqueous medium, the metal content of the effluent will be higher than a predetermined value. In other words, a predetermined threshold value as regards the metal content of the effluent is exceeded. This means that the metal-saturated carrier material must be subjected to a regeneration step, which step is in particular carried out by contacting the carrier material from step c) with an Fe (II) solution. The Fe (II) is adsorbed onto the surface of the carrier material during the regeneration step d), and oxidised as a result of the presence of oxygen in the aqueous medium. It is also possible to use oxidation agents, such as ozone, hydrogen peroxide, potassium permanganate, chlorine and the like. The result is that a new surface has been formed on the carrier material, which surface can function as a new adsorption place for the heavy metal to be removed. Such a regeneration step can be repeated several times. One advantage of such a regeneration step is the fact that the carrier material is regenerated quickly and efficiently, without large amounts of chemicals being required. In addition to that, an Fe (II) solution is available on a large scale and at low cost as a by-product of the steel processing industry. In the above-discussed International application WO 94/06717, continuous dosage of an Fe (II) containing solution takes place during the adsorption step, with an Fe (II) content being measured in the effluent at all times. This means that the effluent obtained from the method according to International application WO 94/06717 contains a specific amount of Fe (II) at all times, which adversely affects further use thereof, for example as drinking water or process water. Furthermore, the presence of Fe (II) may have an adverse effect on the possibility of draining the effluent into the surface water, in particular in the case of waste water treatment. In addition, the method according to International application WO 94/06717 requires the continuous dosage of a Fe (II) solution. It should be understood that such continuous dosage does not only increase the cost, but in addition places an additional burden on the user.

The iron oxide-coated filter medium that is used in the present invention is selected from the group consisting of sand, pumice, anthracite or a combination thereof, in particular sand from an existing ground water purification plant is used. Such a type of sand is available on a large scale, and it is already provided with an iron oxide coating.

Specific process conditions for the regeneration step are:
filtration rate = 5 - 50 m/h, preferably 10 - 20 m/h,
Fe (II) content = 50 - 200 mg/l,
duration = 0.5 - 2 hours,
pH-value = 5.0 - 8.0, preferably 6.0 - 7.0.

The above regeneration conditions may also be adapted, if necessary, the Fe (II) content may be increased to the value just below the solubility limit of Fe (II), for example. The present method can in particular be carried out in one and the same container or filter unit, which means that the adsorption steps a)-c) as well as the regeneration step d) are carried out in the same container or filter unit. In practice this will have major advantages. In a specific embodiment it is also possible, on the other hand, to remove the carrier material, which is saturated with metal ions, and regenerate it outside the container, for example by combining the contents of other adsorption units.

The method according to the present invention can be used for the simultaneous removal of inter alia the following heavy metals: lead, arsenic, chromium, mercury, copper, manganese, nickel, cadmium and selenium, which metals are present in dissolved form in an aqueous medium.

A suitable aqueous medium is for example ground water, drinking water, process water, industrial (waste) water and surface water, with the present invention being suitable in particular for preparing drinking water as well as for treating industrial (waste) water. Since the regeneration of the carrier material from step c) is carried out by contacting the carrier material with an Fe (II)-containing solution, it is desirable for the carrier material to be washed with an aqueous solution, in particular water having a high oxygen content, before the adsorption steps a)-c) are carried out anew, so as to remove iron flocs, as a result of which the oxidation of Fe (II) at the surface of the carrier material will be continued. It is also possible, in a special embodiment, to use an aqueous flow containing chemicals, for example ozone, chlorine, hydrogen peroxide, potassium permanganate. When such a treatment is used, the iron flocs will not undesirably find their way into the effluent flows that have formed during the regeneration process.

In the present method, step b) is carried out in such a manner that the carrier material can be considered as a fixed bed, which means that the fluidisation of the carrier medium that is required according to International application WO 94/06717 is no longer necessary.

In order to obtain an intense contact between the metals- containing aqueous medium and the carrier material, step b) is preferably carried out in such a manner that the aqueous medium is passed in upward direction through the bed of carrier material. It should be understood, however, that the present method does not exclude passing the aqueous medium in downward direction through the bed of carrier material.

In order to achieve a minor pressure drop across the fixed bed of carrier material, it is desirable for the carrier material according to step a) to have an average diameter of 0.8 - 5.0 mm.

The present invention will now be explained in more detail by means of a number of examples, in which reference is made to the accompanying Figures.
Figure 1 is a schematic representation of the removal efficiency of manganese from an aqueous flow.
Figure 2 is a schematic representation of the removal of arsenic from an aqueous composition.
Figure 3 is a schematic representation of the regeneration of a filter unit after a number of regeneration steps.
Figure 4 is a schematic representation of the influence of the regeneration cycle on the removal of arsenic from an aqueous composition.
Figure 5 is a schematic representation of the removal of heavy metals from an aqueous medium.

### Example 1

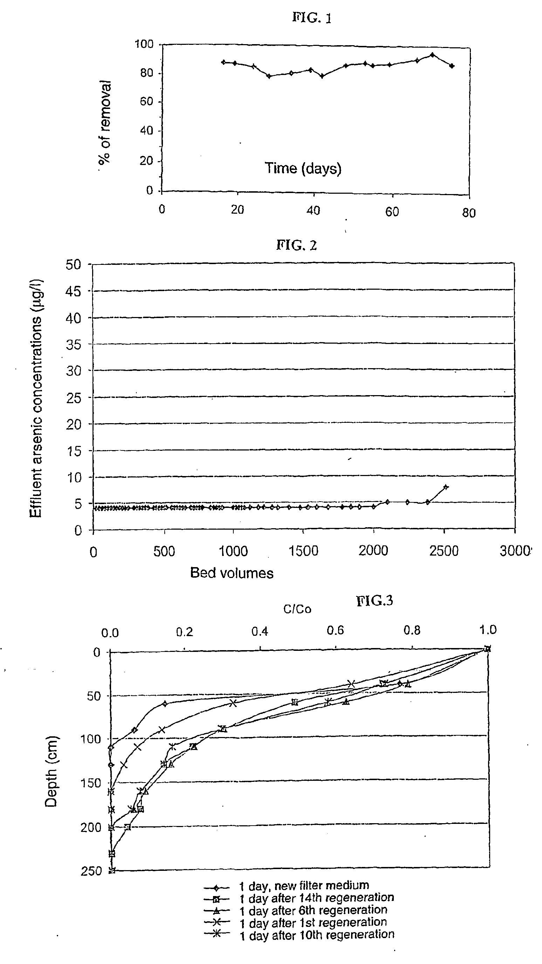

Ground water containing manganese, arsenic and iron in amounts of 3.13 mg/l, 417 µg/l en 3.45 mg/l, respectively, was passed through a filter unit containing an iron oxydehydroxide-coated filter medium as the carrier material, using an average filtration rate of 0.2 m/h and an average contact time of 58 minutes. The results of this experiment are graphically represented in Figure 1, which shows that the removal efficiency over a specific period of time is well over 90%.

### Example 2

In this example a model ground water composition was passed through a filter unit, which filter unit contained iron oxydehydroxide-coated sand. The depth of the filter bed was 2.4 m and the filtration rate was 2 m/h. The composition of the ground water that functioned as the model liquid was arsenic (V) = 250 ± 50 µg/l, PO₄³⁻ = 0.25 ± 0.10 mg as P and HCO₃- = 250 ± 20 mg/l, with the pH-value being 7.7. The result is graphically represented in Figure 2, which shows that the arsenic content in the effluent has a substantially constant value of less than 5 µg/l.

### Example 3

A filter column containing an iron oxydehydroxide-coated filter medium, viz. sand from an existing ground water purification plant, was operated with a model ground water composition for the purpose of establishing the removal profile of arsenic. The ground water composition was as follows: arsenic As (V) = 250 ± 50 pig/1, HCO₃⁻ = 250 ± 20 mg/l, with the pH-value being 7.7 ± 0.2. The filtration rate was 5 m/h and the depth of the bed was 2.3 m. The experimental data are graphically represented in Figure 3, which shows that a high degree of removal of arsenic is achieved even after 14 regeneration treatments.

### Example 4

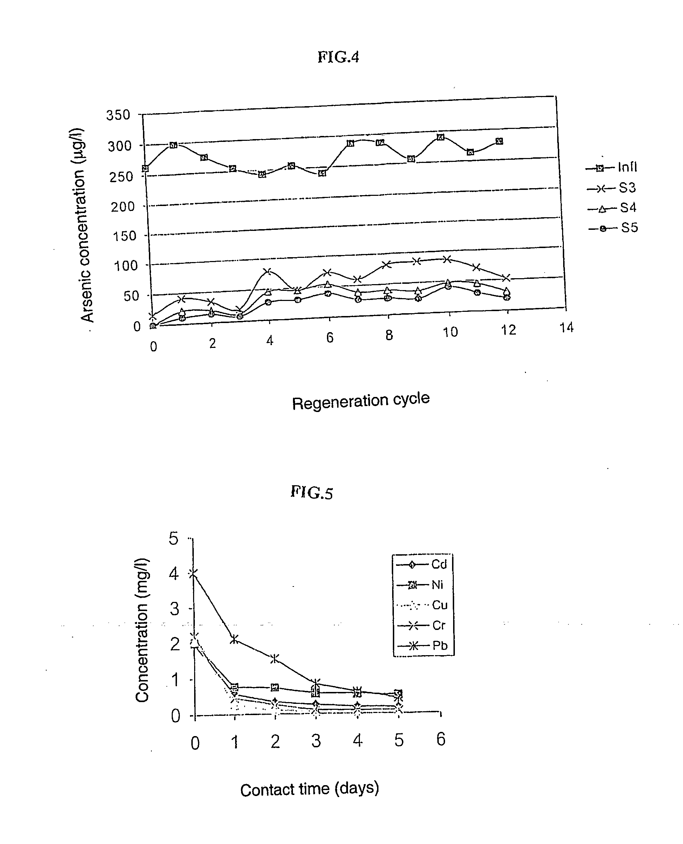

A model ground water composition, comprising arsenic As (V) = 205 ± 50 µg/l, HCO₃⁻ = 250 ± 20 mg/l was passed through a filter unit at a filtration rate of 5 m/h and a filter bed depth of 2.3 m. The results of the experiment, with the arsenic content being established at different positions along the filter unit, are represented in Figure 4, which shows that the arsenic content in the effluent is substantially independent of the number of regeneration steps.

### Example 5

An aqueous medium having an initial lead content of 4 g/l and an initial cadmium, nickel, copper and chromium content of 2 mg/l each was subjected to adsorption experiments. The results of the experiments are graphically represented in Figure 5, which shows that the contents of heavy metals in the effluent had considerably decreased after a contact period of about 5 days.

## Claims

1. A method for the removal of metals from a metal-containing aqueous medium, wherein said aqueous medium is contacted with a carrier material, which carrier material functions as an adsorption medium for the metals, comprising the following steps:
a) providing an already iron oxydehydroxide-coated filter medium as the carrier material,
b) contacting the carrier material obtained in step a) with the aqueous medium so as to obtain an effluent,
c) terminating step b) when the metal content of the effluent exceeds a specific value,
d) regenerating the carrier material from step c) and possibly
e) repeating steps b)-d),
**characterized in that** said regenerating step d) is carried out by contacting said carrier material with an Fe(II) solution.

2. A method according to claim 1, **characterized in that** the iron oxydehydroxide-coated filter medium is selected from the group consisting of sand, pumice, anthracite or a combination thereof.

3. A method according to claim 2, **characterized in that** sand from an existing ground water purification plant is used.

4. A method according to claim 1, **characterized in that** steps a)-d) are carried out in the same container.

5. A method according to claim 1, **characterized in that** the carrier material is washed with water after the regeneration according to step d) so as to remove iron flocs that have formed during said regeneration.

6. A method according to claim 1, **characterized in that** step b) is carried out in such a manner that the carrier material will behave as a fixed bed.

7. A method according to claim 1, **characterized in that** step b) is carried out in such a manner that the aqueous medium is passed in upward direction through the bed of carrier material.

8. A method according to claim 1, **characterized in that** the carrier material according to step a) has an average diameter of 0.8 - 5.0 mm.

9. A method according to claim 1, **characterized in that** the filtration rate of the aqueous medium in step b) is 0.5 - 20.0 m/h.

10. A method according to claim 1, **characterized in that** the overall depth of the bed of carrier material is 0.5 - 4.0 m.

## Patentansprüche

1. Verfahren zur Entfernung von Metallen aus einem metallhaltigen wässrigen Medium, wobei das wässrige Medium mit einem Trägermaterial in Kontakt gebracht wird, das als adsorbierendes Medium für die Metalle dient, wobei das Verfahren folgende Schritte umfasst:
a) Bereitstellen eines bereits mit Eisenoxidhydroxid beschichteten Filtermediums als Trägermaterial,
b) In Kontakt bringen des in Schritt a) erhaltenen Trägermaterials mit dem wässrigen Medium zur Gewinnung eines Ablaufs,
c) Beenden von Schritt b) sobald ein bestimmter Metallgehalt im Ablauf überschritten wird,
d) Regenerieren des Trägermaterials aus Schritt c) und, wahlweise,
e) Wiederholen der Schritte b) - d),
**dadurch gekennzeichnet, dass** die Regeneration des Trägermaterials in Schritt d) ausgeführt wird durch in Kontakt bringen des Trägermaterials mit einer Fe(II)-Lösung.

2. Verfahren nach Anspruch 1, **dadurch gekennzeichnet, dass** das mit Eisenoxidhydroxid beschichtete Filtermedium aus der aus Sand, Bimsstein, Anthrazit oder einer Kombination daraus bestehenden Gruppe ausgewählt wird.

3. Verfahren nach Anspruch 2, **dadurch gekennzeichnet, dass** Sand aus einer bestehenden Grundwasseraufbereitungsanlage verwendet wird.

4. Verfahren nach Anspruch 1, **dadurch gekennzeichnet, dass** die Schritte a) - d) in demselben Behälter ausgeführt werden.

5. Verfahren nach Anspruch 1, **dadurch gekennzeichnet, dass** das Trägermaterial nach der Regeneration gemäß Schritt d) mit Wasser gewaschen wird, um Eisenflocken zu entfernen, welche sich während der Regeneration gebildet haben.

6. Verfahren nach Anspruch 1, **dadurch gekennzeichnet, dass** Schritt b) so ausgeführt wird, dass sich das Trägermaterial wie ein Festbett verhält.

7. Verfahren nach Anspruch 1, **dadurch gekennzeichnet, dass** Schritt b) so ausgeführt wird, dass das wässrige Medium in ansteigender Richtung durch das Trägermaterialbett geführt wird.

8. Verfahren nach Anspruch 1, **dadurch gekennzeichnet, dass** das Trägermaterial in Schritt a) einen mittleren Durchmesser von 0.8 - 5.0 mm aufweist.

9. Verfahren nach Anspruch 1, **dadurch gekennzeichnet, dass** die Filtriergeschwindigkeit des wässrigen Mediums in Schritt b) 0.5 - 20.0 m/h beträgt.

10. Verfahren nach Anspruch 1, **dadurch gekennzeichnet, dass** das Trägermaterialbett eine Gesamttiefe von 0.5 - 4.0 m aufweist.

## Revendications

1. Procédé d'élimination de métaux d'un milieu aqueux contenant un métal, dans lequel ledit milieu aqueux est mis en contact avec un matériau porteur, lequel matériau porteur fonctionne comme un milieu d'adsorption pour les métaux, comprenant les étapes suivantes :
a) fourniture d'un milieu filtrant déjà revêtu d'oxydehydroxyde de fer en tant que matériau porteur,
b) mise en contact du matériau porteur obtenu dans l'étape a) avec le milieu aqueux de façon à obtenir un effluent,
c) achèvement de l'étape b) lorsque la teneur en métal de l'effluent dépasse une valeur spécifique,
d) régénération du matériau porteur de l'étape c) et éventuellement
e) répétition des étapes b) à d), **caractérisé en ce que** ladite étape d) de régénération est réalisée en mettant en contact ledit matériau porteur avec une solution de Fe (II).

2. Procédé selon la revendication 1, **caractérisé en ce que** le milieu filtrant revêtu d'oxydehydroxyde de fer est choisi dans le groupe consistant en le sable, la ponce, l'anthracite ou une combinaison de ceux-ci.

3. Procédé selon la revendication 2, **caractérisé en ce que** du sable provenant d'une station d'épuration d'eaux souterraines existante est utilisée.

4. Procédé selon la revendication 1, **caractérisé en ce que** les étapes a) à d) sont réalisées dans le même contenant.

5. Procédé selon la revendication 1, **caractérisé en ce que** le matériau porteur est lavé à l'eau après la régénération selon l'étape d) de façon à éliminer les flocs de fer qui se sont formés pendant ladite régénération.

6. Procédé selon la revendication 1, **caractérisé en ce que** l'étape b) est réalisée de telle sorte que le matériau porteur se comportera comme un lit fixe.

7. Procédé selon la revendication 1, **caractérisé en ce que** l'étape b) est réalisée de telle sorte que le milieu aqueux passe dans une direction ascendante à travers le lit de matériau porteur.

8. Procédé selon la revendication 1, **caractérisé en ce que** le matériau porteur selon l'étape a) a un diamètre moyen de 0,8 à 5,0 mm.

9. Procédé selon la revendication 1, **caractérisé en ce que** la vitesse de filtration du milieu aqueux dans l'étape b) est de 0,5 à 20,0 m/h.

10. Procédé selon la revendication 1, **caractérisé en ce que** la profondeur totale du lit de matériau porteur est de 0,5 à 4,0 m.
